# EUROPÄISCHE PATENTANMELDUNG

(11) **EP 1 464 764 A1**
(43) Veröffentlichungstag der Anmeldung: **06.10.2004**
(21) Anmeldenummer: 03006557.7
(22) Anmeldetag: 24.03.2003
(51) Int. Cl.: E03D 9/10

(54) **Toilettenanlage**

(71) Anmelder: Warnecke, Thomas, 30880 Laatzen (DE)
(72) Erfinder: Warnecke, Thomas, 30880 Laatzen (DE)

(57) **Zusammenfassung**

Die Erfindung betrifft eine Toilettenanlage (1), insbesondere für den mobilen Einsatz in einem Wohnmobil, einem Caravan oder einem Boot, mit einem Sammelbecken (3) und einer mit dem Sammelbecken (3) verbundenen Ansaugeinheit (5). Das Sammelbecken (3) ist über ein Adapterelement (4) mit der Ansaugeinheit (5) verbunden. Der Ansaugeinheit (5) ist ein Rotationselement angeordnet, welches eine Rotation um eine Rotationsachse (11) ausführt und von einem Elektromotor (6) angetrieben wird. Hierdurch wird der Sammelbeckeninhalt (20) angesaugt und derart beschleunigt, dass der gesamte Sammelbeckeninhalt (20) über einen Abwasseranschluss (8) der Ansaugeinheit (5) und eine angeschlossene Entsorgungsleitung (9) in einen Tank oder Abwasserkanal gefördert wird. Für die Führung des beschleunigten Sammelbeckeninhaltes (20) weist eine Innenwand des Gehäuses der Ansaugeinheit (5) ein wendelförmig ausgebildetes Führungselement auf, durch welche eine parallel zu einer Rotationsachse (11) des Rotationselementes ausgebildete Strömungsrichtung des angesaugten Sammelbeckeninhaltes (20) derart umgeleitet wird, dass diese anschließend parallel zu einer Längsachse (21) des Abwasseranschlusses (8) ausgebildet ist.

## Beschreibung

Die Erfindung betrifft eine Toilettenanlage, insbesondere für den mobilen Einsatz in einem Wohnmobil, einem Caravan oder einem Boot, mit einem Sammelbecken und einer mit dem Sammelbecken verbundenen Ansaugeinheit, welche ein in einem Gehäuse angeordnetes Rotationselement und einen tangential zu einer Gehäusewand angeordneten Abwasseranschluss aufweist, wobei ein mittels der Ansaugeinheit angesaugter Sammelbeckeninhalt durch eine mit dem Abwasseranschluss verbundenen Entsorgungsleitung abführbar ist.

Eine Toilettenanlage der eingangs genannten Art wird bereits in der US 30 35 274 beschrieben. Ein Sammelbecken einer Toilette ist über eine Rohrleitung mit einer Pumpe verbunden. Durch einen Elektromotor wird ein in der Pumpe angeordnetes Rotationselement angetrieben, wodurch das in dem Sammelbecken und in der Verbindungsleitung angeordnete Abwasser angesaugt und über die Entsorgungsleitung abgeführt wird. Gleichzeitig ist auf der Pumpenwelle ein weiterer Rotor angeordnet, durch welchen Frischwasser über eine weitere Verbindungsleitung in das Sammelbecken gefördert wird. Bei Betätigung des Elektromotors wird der Inhalt des Sammelbeckens an- bzw. abgesaugt und gleichzeitig wird Frischwasser in das Sammelbecken gefördert.

Eine in der US 51 09 551 offenbarte Toilettenanlage arbeitet nach einem ähnlichen Funktionsprinzip. Hierbei ist ein Sammelbecken einer Toilette über eine Rohrleitung mit einem Flügelrad verbunden. Das Flügelrad wird über eine hydraulische Turbine angetrieben und saugt das in dem Sammelbecken angeordnete Abwasser durch eine Verbindungsleitung an und führt es über eine Entsorgungsleitung ab. Gleichzeitig wird mittels der hydraulischen Turbine und einer weiteren Verbindungsleitung Frischwasser in das Sammelbecken gefördert.

Eine weitere nach diesem Prinzip aufgebaute Toilette wird in der US 38 78 569 beschrieben. Ein Elektromotor treibt einen Häcksler und ein Flügelrad an, die auf einer gemeinsamen Welle angeordnet sind. Der Sammelbeckeninhalt wird von dem Flügelrad angesaugt, durch den Häcksler zerkleinert und über eine Entsorgungsleitung abgeführt. Parallel zu dem Absaugvorgang wird dem Sammelbecken Frischwasser zugeführt.

Ähnlich aufgebaute Toilettenanlagen bzw. ähnliche Funktionsprinzipien sind der US 36 99 592 und der US 13 29 932 zu entnehmen.

Als nachteilig hat sich bei allen genannten Toilettenanlagen erwiesen, dass das An- bzw. Absaugen des Sammelbeckeninhaltes nur dann funktioniert, wenn gleichzeitig Frischwasser in das Sammelbecken gefördert wird. Hierdurch wird jedoch das Frischwasser mit dem im Sammelbecken angeordneten Abwasser mitsamt den Fäkalien und dem Papier vermischt. Ein vollständiges Absaugen des verschmutzten Abwassers ist durch diese Toilettenanlagen nicht zu erreichen. Je nach Dauer des Absaugvorganges wird sich das Mischungsverhältnis zwischen Frischwasser und Abwasser zwar zu Gunsten des Frischwassers verschieben, aber auch nach einer langen Betriebzeit der Pumpe bzw. des Flügelrades werden in dem Sammelbecken bzw. in der Verbindungsleitung Rückstände des Abwassers bzw. der Fäkalien oder des Papiers verbleiben. Durch das gleichzeitige Spülen mit Frischwasser ergibt sich außerdem ein hoher Wasserverbrauch in Verbindung mit einer erheblichen Geräuschentwicklung. Die Ansauggeschwindigkeit, also die Drehzahl des Flügelrades, ist direkt abhängig von der Zuführgeschwindigkeit und der Menge des dem Sammelbecken zugeführten Frischwassers. Wenn durch das Ansaugen mehr Flüssigkeit aus dem Sammelbecken abgeführt als an Frischwasser zugeführt wird, ist die Funktion des Systems nicht mehr gewährleistet, da ab einem bestimmten Zeitpunkt Luft ansaugt wird.

Der Erfindung liegt die Aufgabe zugrunde, eine verbesserte Toilettenanlage zu schaffen.

Diese Aufgabe wird erfindungsgemäß mit einer Vorrichtung gemäß den Merkmalen des Anspruchs 1 gelöst. Die weitere Ausgestaltung der Erfindung ist den Unteransprüchen 2 bis 13 zu entnehmen.

Erfindungsgemäß ist also eine Vorrichtung vorgesehen, bei der eine Innenwand des Gehäuses ein wendelförmig ausgebildetes Führungselement aufweist, durch welche eine parallel zu einer Rotationsachse des Rotationselementes ausgebildete Strömungsrichtung des angesaugten Sammelbeckeninhaltes derart veränderbar ist, dass diese anschließend zumindest abschnittsweise parallel zu einer Längsachse des Abwasseranschlusses ausgebildet ist. Hierdurch wird eine Möglichkeit geschaffen, die Ansaugdauer also die Betriebszeit des Rotationselementes erheblich zu reduzieren. Durch eine entsprechende Drehzahl des Rotationselementes wird der gesamte Sammelbeckeninhalt angesaugt und derart beschleunigt, das eine kurzes Betriebsintervall des Rotationselementes ausreicht, den gesamten Sammelbeckeninhalt, also Abwasser, Fäkalien und Papier über den Abwasseranschluss und die Entsorgungsleitung abzuführen. Durch das Führungselement können unkontrollierte Verwirbelungen und dadurch auch Strömungsgeschwindigkeitsverluste vermieden werden. Somit kann ein störungsfreier Betrieb der Toilettenanlage gewährleistet werden.

Dabei erweist es sich als besonders zweckmäßig, dass das wendelförmige Führungselement eingängig ausgebildet ist. Ein eingängiges Führungselement reicht aus, um die Strömungsrichtung in der gewünschten Weise zu verändern. Durch mehrgängige Führungselemente entstehen zusätzlich unerwünschte Verwirbelungen innerhalb des Gehäuses in Verbindung mit einem Verlust an Strömungsgeschwindigkeit.

Besonders vorteilhaft ist dabei, dass das wendelförmige Führungselement eine konstante Steigung aufweist. Durch die konstante Steigung des Führungselementes kann eine kontinuierliche Strömung ohne Strömungsgeschwindigkeitsverluste und Verwirbelungen realisiert werden.

Eine andere besonders zweckmäßige Weiterbildung der Erfindung wird auch dadurch geschaffen, dass das wendelförmige Führungselement einstückig mit dem Gehäuse der Ansaugeinheit ausgebildet ist. Dadurch sind keine zusätzlichen Befestigungselemente für die Fixierung des Führungselementes in dem Gehäuse der Ansaugeinheit erforderlich. Die Montage bzw. die Herstellung der Ansaugeinheit wird hierdurch erheblich vereinfacht.

Eine andere Abwandlung wird dadurch erreicht, dass das wendelförmige Führungselement einen wendelförmig ausgebildeten Führungskanal mit insbesondere konstanter Querschnittsfläche begrenzt. Durch den Führungskanal kann die Strömung des Sammelbeckeninhaltes innerhalb des Gehäuses der Ansaugeinheit noch wirkungsvoller umgeleitet werden.

Dabei erweist es sich als besonders praxisnah, dass das wendelförmige Führungselement frei von Durchbrechungen ist. Hierdurch wird eine durchgängige Führungsfläche zur Verfügung gestellt, durch welche Verwirbelungen des angesaugten Sammelbeckeninhaltes ausgeschlossen werden.

Eine ebenfalls besonders vorteilhafte Ausgestaltung der vorliegenden Erfindung wird dadurch erreicht, dass das Rotationselement mehrere geneigte Flügel aufweist. Durch die auf dem Umfang des Rotationselementes verteilten Flügel wird der Sammelbeckeninhalt angesaugt und derart beschleunigt, dass die Strömungsgeschwindigkeit ausreicht, um den gesamten Sammelbeckeninhalt über den Abwasseranschluss und die angeschlossene Entsorgungsleitung abzuführen. Gleichzeitig werden die nicht flüssigen Bestandteile des Sammelbeckeninhaltes, beispielsweise Fäkalien oder Papier, durch die geneigten Flügel des Rotationselementes zerkleinert. Ein zusätzlicher Häcksler für die Zerkleinerung ist hierdurch nicht mehr erforderlich.

Als besonders zweckmäßig erweist es sich, dass das Rotationselement in einem Bereich um die Rotationsachse eine Auswölbung aufweist. Dadurch wird eine Ablagerung von Fäkalien oder Papier im Bereich der Rotationsachse verhindert. Die Auswölbung ist derart ausgestaltet, dass Fäkalien oder Papier welche im Bereich der Rotationsachse auf das Rotationselement treffen an der Auswölbung abgleiten und den geneigten Flügeln zugeführt werden, wo sie dann zerkleinert und abgeführt werden.

Eine ebenfalls besonders vorteilhafte Weiterbildung der vorliegenden Erfindung wird auch dadurch geschaffen, dass zwischen dem Sammelbecken und der Ansaugeinheit ein Adapterelement aus einem elastischen Material angeordnet ist. Hierdurch werden Vibrationen die bei einem Betrieb des Rotationselementes entstehen und Erschütterungen, welche unter anderem auch durch das Zerkleinern von Fäkalien und Papier verursacht werden, gedämpft und von der Toilette entkoppelt, so dass ein Benutzer der Toilette diese Vibrationen und Erschütterungen nicht bemerkt.

Dabei erweist es sich als besonders wirkungsvoll, dass das Adapterelement in einer horizontalen Ebene mit einer Abflussöffnung des Sammelbeckens liegt und dass die Ansaugeinheit mit Rotationselement und Abwasseranschluss unterhalb dieser Ebene angeordnet ist. Hierdurch wird gewährleistet, dass der gesamte Sammelbeckeninhalt mittels der Ansaugeinheit an- bzw. abgesaugt werden kann. Es verbleiben nach der Betätigung der Ansaugeinheit somit keine Rückstände von verschmutztem Wasser, Fäkalien oder Papier im Bereich des Sammelbeckens.

Eine weitere zweckmäßige Weiterbildung ergibt sich dadurch, dass das Rotationselement mittels eines Elektromotors antreibbar ist. Der Elektromotor kann beispielsweise durch eine 12 V- Autobatterie gespeist werden. Hierdurch kann ein mobiler Einsatz der Toilettenanlage, beispielsweise in einem Wohnmobil, gewährleistet werden.

Dabei erweist es sich als besonders vorteilhaft, dass zwischen dem Rotationselement und dem Elektromotor ein Riementrieb angeordnet ist. Durch diesen elastischen Riemen wird eine zusätzlich Dämpfung von im Betrieb auftretenden Vibrationen und Erschütterungen erreicht.

Besonders zweckmäßig ist es dabei, dass dem Sammelbecken ein umlaufendes Spülrohr zugeordnet ist. Im Anschluss an den Absaugvorgang wird dem nunmehr leeren Sammelbecken mittels des Spülrohres Frischwasser zugeführt. Durch die Zufuhr des Frischwassers im Anschluss an den Absaugvorgang kann der Wasserverbrauch der Toilettenanlage erheblich reduziert werden. Durch den Ansaugvorgang wird ausschließlich der verschmutzte Sammelbeckeninhalt abgesaugt, und das Frischwasser dient ausschließlich zum erneuten Befüllen der Toilettenanlage, wodurch auch der Geruchsverschluss der Toilettenanlage realisiert wird.

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt in
- Fig.1: eine Prinzipskizze der erfindungsgemäßen Toilettenanlage;
- Fig.2: ein Rotationselement in einer Draufsicht;
- Fig.3: die Auswölbung des Rotationselementes aus Figur 2 in einer entlang der Linie III-III geschnittenen Darstellung;
- Fig. 4: die Ansaugeinheit in einer Draufsicht;
- Fig. 5: die Ansaugeinheit aus Figur 4 in einer entlang der Linie V-V geschnittenen Darstellung.

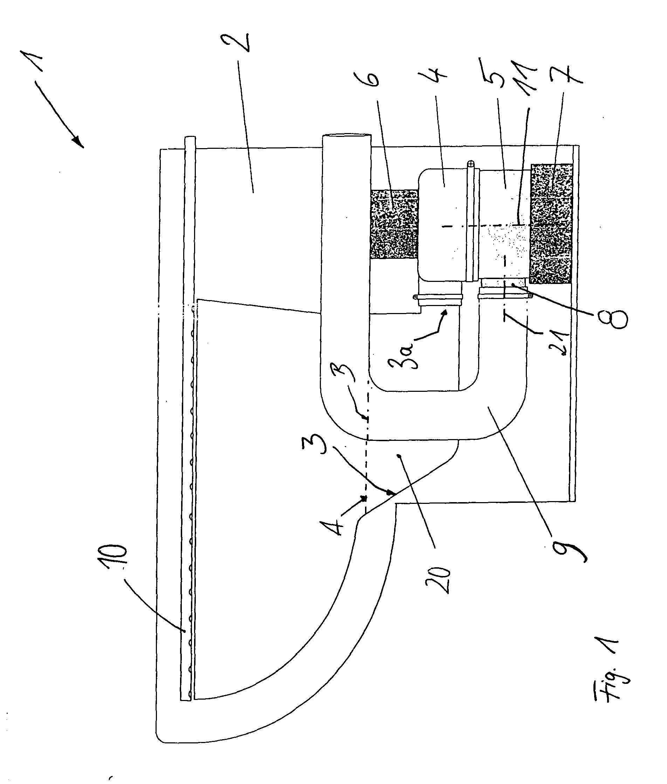

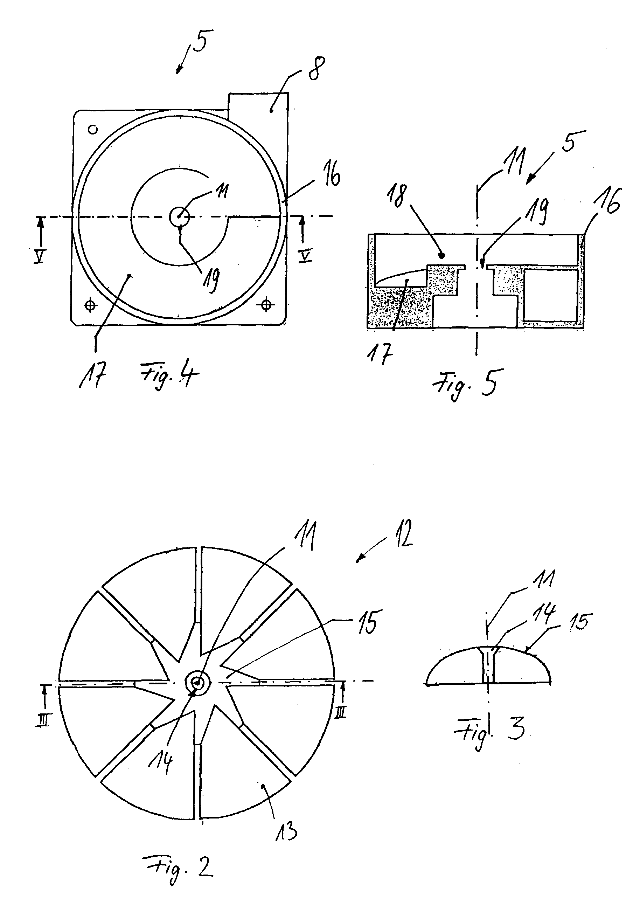

Figur 1 zeigt eine Prinzipskizze der erfindungsgemäßen Toilettenanlage 1. Die Toilettenanlage 1 weist ein Toilettengehäuse 2 und ein Sammelbecken 3 auf. Das Sammelbecken 3 ist mittels einer Abflussöffnung 3a und ein Adapterelement 4 mit einer Ansaugeinheit 5 verbunden ist. Die Ansaugeinheit 5 und ein Elektromotor 6 sind gemeinsam auf einer Montageeinheit 7 angeordnet. An einen Abwasseranschluss 8 der Ansaugeinheit 5 ist eine U-förmig ausgebildete Entsorgungsleitung 9 angeschlossen, durch welche die Toilettenanlage 1 mit einem nicht dargestellten Tank oder einen Abwasserkanal verbunden ist. Im oberen Bereich des Toilettengehäuses 2 ist ein dem Sammelbecken 3 zugeordnetes umlaufendes Spülrohr 10 angeordnet, durch welches das Sammelbecken 3 mit Wasser befüllt wird. In der Ansaugeinheit 5 ist ein um eine Rotationsachse 11 rotierendes Rotationselement 12 angeordnet, welches insbesondere in den Figuren 2 und 3 dargestellt ist.

Die Figur 2 zeigt das Rotationselement 12 in einer Draufsicht. Das als Flügelrad ausgebildete Rotationselement 12 rotiert um die Rotationsachse 11 und weist mehrere geneigt angeordnete Flügel 13 auf. In der Mitte des Rotationselementes 12 eine Durchbrechung 14 für eine Antriebswelle angeordnet. Die Antriebswelle ist über einen Riementrieb mit dem Elektromotor 6 verbunden und wird durch diesen angetrieben. Im Bereich um die Rotationsachse 11 bzw. um die Durchbrechung 14 weist das Rotationselement 12 eine Auswölbung 15 auf, welche auch in der Figur 3 in einer entlang der Linie III-III geschnittenen Darstellung abgebildet ist.

Die Figur 4 zeigt eine Draufsicht der Ansaugeinheit 5 ohne das um die Rotationsachse 11 rotierende Rotationselement 12. Die Figur 5 zeigt die Ansaugeinheit 5 aus Figur 4 in einer entlang der Linie V-V geschnittenen Darstellung. Eine Innenwand des Gehäuses 16 weist ein wendelförmiges Führungselement 17 auf, welches eingängig ausgebildet ist und im Bereich eines tangential zu dem Gehäuse 16 angeordneten Abwasseranschlusses 8 endet. In einer Aussparung 18 ist das nicht dargestellte Rotationselement 12 angeordnet. Für die Antriebswelle des Rotationselementes 12 weist die Ansaugeinheit 5 eine Durchbrechung 19 auf.

Bei Bedarf treibt der Elektromotor 6 über einen Riementrieb, beispielsweise einen Zahnriemen, das Rotationselement 12 für eine kurze Zeit, in etwa zwei Sekunden, an. Während dieses Antriebszeit erreicht das Rotationselement eine Drehzahl von etwa 2500-2800 U/min, Hierdurch wird der gesamte Sammelbeckeninhalt 20 bestehend aus Wasser, Fäkalien und/oder Papier angesaugt, beschleunigt und transportiert. Über das Adapterelement 4 gelangt der Sammelbeckeninhalt 20 in die Ansaugeinheit 5. In der Ansaugeinheit 5 werden die einzelnen Bestandteile des Sammelbeckeninhaltes 20 beim Durchtritt durch das Rotationselement 12 zerkleinert. Der durch die hohe Drehzahl des Rotationselementes 12 beschleunigte Sammelbeckeninhalt 20 wird mittels des dem Gehäuse 16 zugeordneten Führungselementes 17 derart umgeleitet, dass eine Strömungsrichtung des Sammelbeckeninhaltes 20 nach dem Durchtritt durch die Ansaugeinheit 5 parallel zu einer Längsachse 21 des Abwasseranschlusses 8 ausgebildet ist. Hierdurch werden Verwirbelungen in der Ansaugeinheit 5 weitestgehend vermieden und die Strömungsgeschwindigkeit des Sammelbeckeninhaltes 20 bleibt annähernd erhalten. Der Sammelbeckeninhalt 20 wird über die an den Abwasseranschluss 8 angeschlossene Entsorgungsleitung 9 in einen Tank oder einen Abwasserkanal gefördert. Nachdem der Sammelbeckeninhalt 20 also vollständig angesaugt und entfernt worden ist, kann dem Sammelbecken 3 durch das Spülrohr 10 Frischwasser zugeführt werden. Hierdurch kann eine Vermischung von Abwasser und zugeführtem Frischwasser vermieden werden. Der Füllpegel A des Sammelbeckens 3 ist dabei abhängig von dem Füllpegel B in der Entsorgungsleitung 9.

Aufgrund des sehr geringen Wasserverbrauches (0,6 Liter) und aufgrund der Tatsache, dass keine chemischen Zusätze benötigt werden, ist diese Toilettenanlage 1 insbesondere für den mobilen Einsatz in einem Wohnmobil, Caravan oder Boot geeignet, wird aber nicht hierauf beschränkt.

## Patentansprüche

1. Toilettenanlage (1), insbesondere für den mobilen Einsatz in einem Wohnmobil, einem Caravan oder einem Boot, mit einem Sammelbecken (3) und einer mit dem Sammelbecken (3) verbundenen Ansaugeinheit (5), welche ein in einem Gehäuse (16) angeordnetes Rotationselement (12) und einen tangential zu einer Gehäusewand angeordneten Abwasseranschluss (8) aufweist, wobei ein mittels der Ansaugeinheit (5) angesaugter Sammelbeckeninhalt (20) durch eine mit dem Abwasseranschluss (8) verbundene Entsorgungsleitung (9) abführbar ist, **dadurch gekennzeichnet, dass** eine Innenwand des Gehäuses (16) ein wendelförmig ausgebildetes Führungselement (17) aufweist, durch welche eine parallel zu einer Rotationsachse (11) des Rotationselementes (12) ausgebildete Strömungsrichtung des angesaugten Sammelbeckeninhaltes (20) derart veränderbar ist, dass diese anschließend zumindest abschnittsweise parallel zu einer Längsachse (21) des Abwasseranschlusses (8) ausgebildet ist.

2. Toilettenanlage (1) nach Anspruch 1, **dadurch gekennzeichnet, dass** das wendelförmige Führungselement (17) eingängig ausgebildet ist.

3. Toilettenanlage (1) nach den Ansprüchen 1 oder 2, **dadurch gekennzeichnet, dass** das wendelförmige Führungselement (17) eine konstante Steigung aufweist.

4. Toilettenanlage (1) nach zumindest einem der vorhergehenden Ansprüche, **dadurch gekennzeichnet, dass** das wendelförmige Führungselement (17) einstückig mit dem Gehäuse (16) der Ansaugeinheit (5) ausgebildet ist.

5. Toilettenanlage (1) nach zumindest einem der vorhergehenden Ansprüche, **dadurch gekennzeichnet, dass** das wendelförmige Führungselement (17) einen wendelförmig ausgebildeten Führungskanal mit insbesondere konstanter Querschnittsfläche begrenzt

6. Toilettenanlage (1) nach zumindest einem der vorhergehenden Ansprüche, **dadurch gekennzeichnet, dass** das wendelförmige Führungselement (17) frei von Durchbrechungen ist.

7. Toilettenanlage (1) nach Anspruch 1, **dadurch gekennzeichnet, dass** das Rotationselement (12) mehrere geneigte Flügel (13) aufweist.

8. Toilettenanlage (1) nach den Ansprüchen 1 oder 7, **dadurch gekennzeichnet, dass** das Rotationselement (12) in einem Bereich um die Rotationsachse (11) eine Auswölbung (15) aufweist.

9. Toilettenanlage (1) nach Anspruch 1, **dadurch gekennzeichnet, dass** zwischen dem Sammelbecken (3) und der Ansaugeinheit (5) ein Adapterelement (4) aus einem elastischen Material angeordnet ist.

10. Toilettenanlage (1) nach zumindest einem der vorhergehenden Ansprüche, **dadurch gekennzeichnet, dass** das Adapterelement (4) in einer horizontalen Ebene mit einer Abflussöffnung (3a) des Sammelbeckens (3) liegt und dass die Ansaugeinheit (5) mit Rotationselement (12) und Abwasseranschluss (8) unterhalb dieser Ebene angeordnet ist.

11. Toilettenanlage (1) nach zumindest einem der vorhergehenden Ansprüche, **dadurch gekennzeichnet, dass** das Rotationselement (12) mittels eines Elektromotors (6) antreibbar ist.

12. Toilettenanlage (1) nach Anspruch 11, **dadurch gekennzeichnet, dass** zwischen dem Rotationselement (12) und dem Elektromotor (6) ein Riementrieb angeordnet ist.

13. Toilettenanlage (1) nach zumindest einem der vorhergehenden Ansprüche, **dadurch gekennzeichnet, dass** dem Sammelbecken (3) ein umlaufendes Spülrohr (10) zugeordnet ist.
